# EUROPÄISCHE PATENTSCHRIFT

(11) **EP 2 996 908 B1**
(45) Veröffentlichungstag und Bekanntmachung des Hinweises auf die Patenterteilung: **16.01.2019**
(21) Anmeldenummer: 14719799.0
(22) Anmeldetag: 29.04.2014
(51) Int. Cl.: B60R 21/34, B62D 21/15, B60R 19/52

(54) **FAHRZEUG MIT EINEM KNICKELEMENT ZWISCHEN DER GRUNDKAROSSERIE UND EINEM AUSSENKAROSSERIETEIL**
VEHICLE WITH A KINKING ELEMENT BETWEEN A CHASSIS PART AND AN OUTER BODYWORK PART
VÉHICULE AVEC UN ÉLÉMENT PLIABLE ENTRE LA STRUCTURE ET L'ÉLÉMENT EXTÉRIEUR DE LA CAISSE

(30) Priorität: 15.05.2013 DE 102013208981
(43) Veröffentlichungstag der Anmeldung: 23.03.2016
(73) Patentinhaber: Bayerische Motoren Werke Aktiengesellschaft, 80809 München (DE)
(72) Erfinder: ÜBELACKER, Andreas, 80939 München (DE); KAISER, Tobias, 91358 Kunreuth (DE)
(86) Internationale Anmeldenummer: PCT/EP2014/058720
(87) Internationale Veröffentlichungsnummer: WO 2014/183991

(56) Entgegenhaltungen:
- EP-A1- 2 045 146
- EP-A1- 2 540 577
- JP-A- 2007 055 367
- US-A1- 2012 043 786

## Beschreibung

Die Erfindung betrifft ein Fahrzeug, insbesondere einen Personenkraftwagen oder einen Lastkraftwagen, mit einer Grundkarosserie zum Abstützen mindestens eines Außenkarosserieteils.

Aus der EP 2 540 577 A1 ist bereits ein Fahrzeug mit einer Grundkarosserie zum Abstützen eines Außenkarosserieteils bekannt, bei dem das Außenkarosserieteil an der Grundkarosserie mit mindestens einem Element gehalten ist, das bei einer äußeren Krafteinwirkung knickbar ist.

Karosserien heutiger Personenkraftwagen und Lastkraftwagen sind in der Regel abschnittsweise mit einer Grundkarosserie und daran angebrachten Außenkarosserieteilen gestaltet. Die Grundkarosserie bildet eine Art inneren Stützrahmen, an dem dann außen jene Karosserieteile angebracht sind, die teilweise oder ganz die Außenhaut der Karosserie bilden. So sind bei heutigen Personenkraftwagen z.B. am in Fahrtrichtung nach vorne gerichteten Ende eine Kühlerverkleidung und eine Stossfängerverkleidung vorgesehen, die innen an einem vorderen Querträger bzw. einer Vorderwand befestigt sind. Die Stossfängerverkleidung bildet den unteren Teil der Anordnung, während die Kühlerverkleidung darüber angeordnet ist und an ihrem oberen Ende mit dem Querträger fest verschraubt ist. Um insbesondere im Falle eines Fußgängeraufpralls Energie absorbieren zu können, muss die Front des Fahrzeugs aber vergleichsweise weich gestaltet sein. Dazu werden derzeit vergleichsweise aufwändige Vorkehrungen an der Grundkarosserie vorgenommen.

Gemäß der Erfindung ist ein Fahrzeug mit den Merkmalen des Anspruchs 1 bereitgestellt. Mit einem erfindungsgemäßen Knickelement ist die an Außenkarosserieteilen erforderliche Nachgiebigkeit gezielt in eine Schnittstelle bzw. einen Bereich zwischen Außenkarosserieteil und Grundkarosserie gelegt. In diesem Bereich ist ein gezielt nachgiebiges Knickelement vorgesehen, welches bei einem Aufprall knickt und damit Energie absorbiert. Der Querschnitt des Knickelements ist dazu an vorbestimmten Abschnitten mit angepassten Flächenträgheitsmomenten gestaltet. Ferner sind die Auflagerung und die Einspannung des Knickelements entsprechend angepasst.

Unter Knicken wird dabei der Verlust der Stabilität des Knickelements bis hin zum schlagartigen und gewaltsamen Versagen verstanden. Das Knickelement ist dazu vorzugsweise mit mindestens einem geraden bzw. leicht gekrümmten Stab oder Balken gestaltet. Dieses Knickelement ist so platziert, dass die Aufprallenergie in das Knickelement unter Wirkung von Druckkräften eingebracht wird, deren Wirkungslinie in der Stabachse liegt, und/oder unter Wirkung von Biegemomenten. Der Verlust der Stabilität äußert sich in mit der Belastung rasch wachsenden Formänderungen des Knickelements ab einer bestimmten Belastung (Knicklast), und zwar mit einem seitlichen Ausweichen der Stabachse oder Balkenachse (Biegeknicken) oder einem Verdrehen des Stab- bzw. Balkenquerschnitts (Drillknicken) oder einem seitlichen Ausweichen der Stabachse oder Balkenachse und einem Verdrehen des Stab- bzw. Balkenquerschnitts (Biegedrillknicken, früher auch als Kippen bezeichnet).

Dabei ist das erfindungsgemäße Knickelement mit einer länglichen Knickkante gestaltet. Es ergibt sich somit ein flächiges Knickelement, welches bei einem Aufprall gezielt entlang der Knickkante verformt wird. Es kann so Aufprallenergie auch in Zonen der Karosserie übertragen werden, die vom Aufprallpunkt entfernt liegen.

Die Knickkante ist vorzugsweise quer zur Längsachse des Fahrzeugs ausgerichtet. Eine solche Knickkante ist insbesondere im Hinblick auf einen Frontalaufprall, vor allem bei einem Fußgängeraufprall von vorne, von Vorteil.

Die Knickkante erstreckt sich ferner über die gesamte Breitenerstreckung des Außenkarosserieteils. Derartige Knickkanten erbringen ihre Knickwirkung über einen weiten bzw. großen Bereich der Außenkarosserie.

Das Außenkarosserieteil umfasst eine Kühlerverkleidung. An der Kühlerverkleidung kann ferner vorteilhaft zugleich eine Stoßfängerverkleidung insbesondere einstückig gehalten sein.

Das erfindungsgemäße Knickelement ist dabei zwischen dem oberen Randbereich der Kühlerverkleidung und einem vorderen Querträger der Grundkarosserie angeordnet. Das dortige Knickelement entwickelt seine Wirkung am oberen Rand der Kühlerverkleidung und ist dort insbesondere bei einem Fußgängeraufprall hilfreich. Ferner hat das Knickelement unter der dortigen Motorhaube ausreichend Freiraum für seine Knickauslenkung.

Für eine kostengünstig herstellbare, bauraumsparende und zugleich wirkungsvolle Anbringung ist das Knickelement gemäß der Erfindung einstückig mit dem Außenkarosserieteil ausgebildet. Mit derartigen Anordnungen kann die Teilezahl verringert und es können für das Knickelement vorteilhaft Herstellungsverfahren wie Kunststoffspritzen oder Blechpressen verwendet werden, wie sie auch für die Außenkarosserieteile und/oder die Grundkarosserie genutzt werden.

Nachfolgend wird ein Ausführungsbeispiel der erfindungsgemäßen Lösung anhand der beigefügten, schematischen Zeichnungen näher erläutert. Es zeigt:
- Fig. 1: eine perspektivische Draufsicht auf Außenkarosserieteile einer Kühlerverkleidung und einer Stoßfängerverkleidung mit zugehöriger Grundkarosserie eines Personenkraftwagens gemäß dem Stand der Technik,
- Fig. 2: das Detail II in Fig. 1,
- Fig. 3: eine perspektivische Draufsicht auf Außenkarosserieteile einer Kühlerverkleidung und einer Stoßfängerverkleidung mit zugehöriger Grundkarosserie eines Personenkraftwagens gemäß der Erfindung,
- Fig. 4: den Längsschnitt IV - IV gemäß Fig. 3 und
- Fig. 5: die Ansicht gemäß Fig. 4 unter Krafteinwirkung.

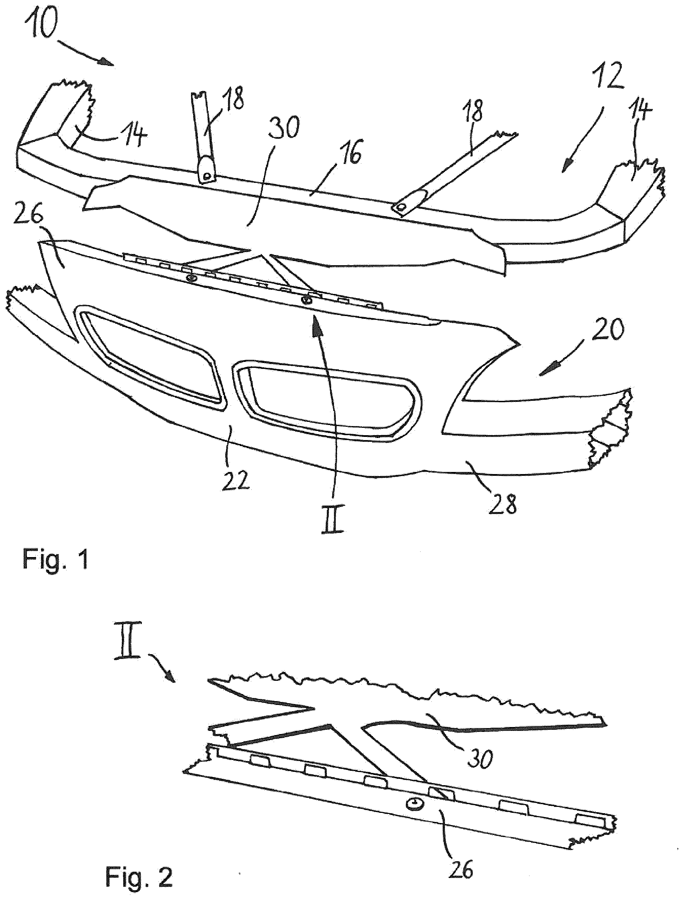

In den Fig. 1 bis 5 ist je ein Fahrzeug 10 mit seiner Grundkarosserie 12 veranschaulicht, die insbesondere mit zwei in Fahrzeuglängsrichtung bzw. Hauptfahrtrichtung ausgerichteten, im Wesentlichen parallelen Längsträgern 14 sowie einem diese verbindenden, vorderen Querträger 16 gebildet ist. Der Querträger 16 ist zu den Längsträgern 14 hin mit schräg ausgerichteten Eckstreben 18 zusätzlich versteift, so dass mit den Bauteilen 14, 16 und 18 eine weitgehend verwindungssteife Grundkarosserie 12 gebildet ist.

An der Grundkarosserie 12 sind außenseitig mehrere Außenkarosserieteile 20 angebracht, wobei von diesen vorliegend insbesondere eine Frontschürze 22 dargestellt ist. Die Frontschürze 22 erstreckt sich im Wesentlichen in vertikaler Richtung über die gesamte Front des Fahrzeugs 10 unterhalb einer Motorhaube 24. Dabei ist die Frontschürze 22 in ihrem oberen Teil von einer Kühlerverkleidung 26 und in ihrem unteren Teil von einer Stoßfängerverkleidung 28 gebildet.

Am oberen Rand der Kühlerverkleidung 26 ist diese in horizontaler Richtung an dem Querträger 16 abgestützt. Dazu ist bei dem Beispiel gemäß dem Stand der Technik der Fig. 1 und 2 eine starres Stützelement 30 zwischen der Kühlerverkleidung 26 und dem Querträger 16 ortsfest eingeschraubt.

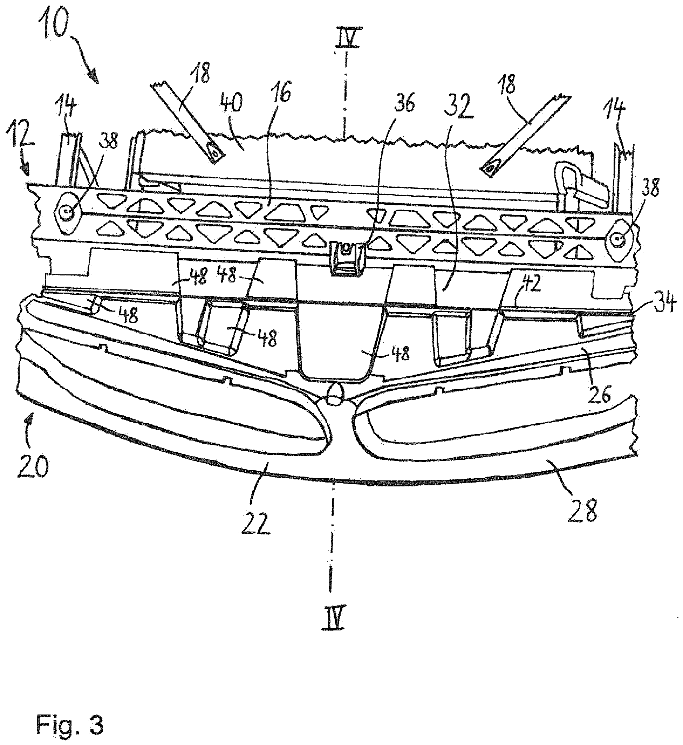

Bei der erfindungsgemäßen Gestaltung entsprechend den Fig. 3 bis 5 ist am oberen Rand der Kühlerverkleidung 26 über deren gesamte Breite ein Knickelement 32 angeordnet. Dabei ist das Knickelement 32 insgesamt einstückig mit der Frontschürze 22 und demzufolge auch einstückig mit der Stoßfängerverkleidung 28 besonders kostensparend in einem Herstellungsverfahren geformt.

Dieses Knickelement 32 ist als eine im Wesentlichen flache Platte mit einer darin ausgebildeten, quer zur Fahrtrichtung ausgerichteten, in etwa mittig angeordneten Knickkante 34 gestaltet. Die Knickkante 34 ist dabei über die gesamte Breitenerstreckung des Knickelements 32 und der Kühlerverkleidung 26 als Außenkarosserieteil 20 ausgebildet. Damit ist eine Knickwirkung und eine daraus resultierende Nachgiebigkeit der Außenkarosserie über einen weiten Bereich erreicht.

Ferner liegt das Knickelement 32 mit zumindest einem Auflageelement 36 am Querträger 16 auf, das vorliegend einstückig mit dem Knickelement 32 gestaltet und am Querträger 16 angeschraubt ist. Der Querträger 16 ist wiederum mit zumindest jeweils einem Halteelement 38 an den beiden Längsträgern 14 gehalten, insbesondere geschraubt, die ferner mit einem zweiten Querträger 40 verbunden sind. An diesem zweiten Querträger 40 sind vorliegend die beiden die Grundkarosserie 12 stabilisierenden Eckstreben 18 angeschraubt. Derart gestaltet, kann mit der Knickkante 34 bei einem Aufprall auftretende Aufprallenergie auch in Zonen der Grundkarosserie 12 übertragen werden, die von einem Aufprallpunkt am Fahrzeug 10 entfernt liegen.

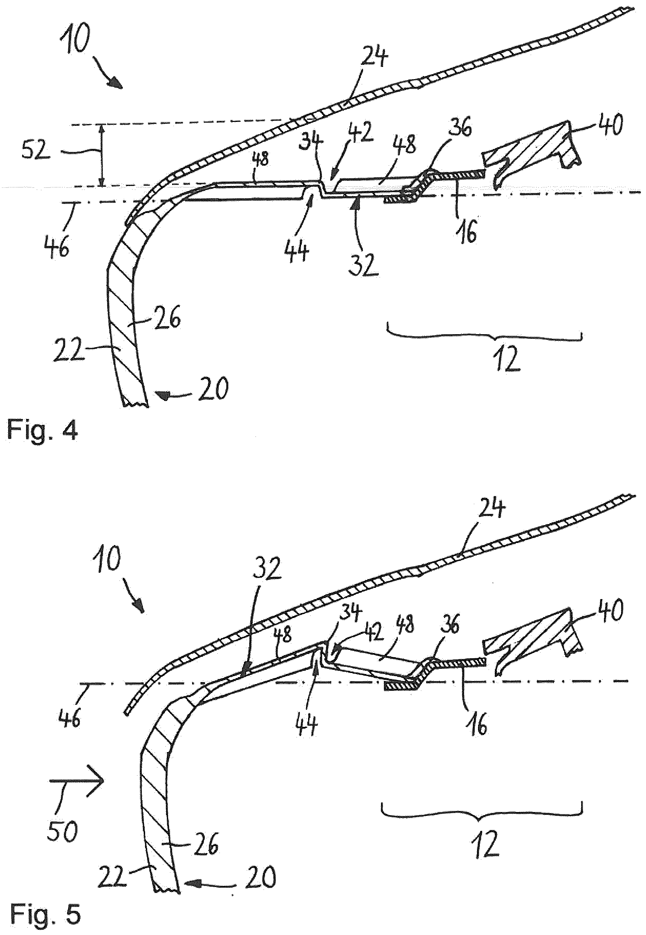

Im Detail weist das Knickelement 32 an der Knickkante 34 abwechselnd abschnittsweise von oben eine Sicke 42 und von unten eine Sicke 44 als rinnenförmige Vertiefung auf, die besonders deutlich in Fig. 4 und 5 erkennbar sind. Ferner ist in der im Wesentlichen flachen Platte des Knickelements 32 mit einer Grundebene 46 mindestens ein im Vergleich zur Grundebene 46 in vertikaler Richtung erhöhter, flächiger Bereich bzw. Abschnitt 48 ausgebildet. Mit dem mindestens einen erhöhten, flächigen Abschnitt 48 ist das Knickelement 32 in seinen Flächenträgheitsmomenten bedarfsgerecht angepasst. In vorliegendem Ausführungsbeispiel sind neun solcher Abschnitte 48 ausgeformt, die an der Knickkante 34 versetzt angeordnet sind. Alternativ ist in weiter nicht dargestellten Varianten der erfindungsgemäßen Lösung je nach Bedarf auch eine andere Anordnung der Abschnitte 48 möglich.

Derart gestaltet, kann sich das Knickelement 32 bei einer äußeren, von vorne wirkenden Kraft 50, wie sie bei einem Aufprall auftritt, vorbestimmt verformen, vorliegend gezielt an der Knickkante 34 nach oben knicken. Eine maximal mögliche Knickauslenkung ist dabei insbesondere mittels der Sicken 42 und 44 mit deren Breiten- und Tiefenerstreckungen sowie mittels des mindestens einen Abschnitts 48 mit dessen Breiten- und Höhenerstreckung festgelegt. Die derartige maximal mögliche Knickauslenkung ist ferner so definiert, dass die Motorhaube 24 vom Knickelement 32 bei maximaler Auslenkung nicht berührt wird. Dazu ist mit einem Abstand 52 zwischen dem Knickelement 32 und der Motorhaube 24 ein entsprechender Freiraum geschaffen.

Bei einem Aufprall wird zunächst aufgrund der Kraft 50 die Frontschürze 22 in Richtung Fahrzeuginnenraum verschoben, wodurch das Knickelement 32 an der Knickkante 34 nach oben geknickt wird. Damit wird eine beim Aufprall auftretende Aufprallenergie durch Umwandlung in Verformungsenergie und Wärme absorbiert, ohne Schäden am Fahrzeug 10 zu verursachen. Der Querträger 16 bleibt dabei in seiner Form zumindest nahezu unverändert, was mittels des Auflageelements 36 und einer damit erzielten entsprechend angepassten Auflagerung des Knickelements 32 am Querträger 16 ermöglicht wird (Fig. 5).

Darüber hinaus wird mittels des erfindungsgemäßen Knickelements 32 vor allem auch die beim Aufprall des Fahrzeugs 10 auf einen Gegenstand oder eine Person wirkende Aufprallenergie erheblich reduziert. Damit wird der Gegenstand oder die Person, wie insbesondere ein Fußgänger, beim Aufprall besonders gut vor Beschädigung oder Verletzung geschützt.

### Bezugszeichenliste

- 10: Fahrzeug
- 12: Grundkarosserie
- 14: Längsträger
- 16: vorderer Querträger
- 18: Eckstrebe
- 20: Außenkarosserieteil
- 22: Frontschürze
- 24: Motorhaube
- 26: Kühlerverkleidung
- 28: Stoßfängerverkleidung
- 30: Stützelement
- 32: Knickelement
- 34: Knickkante
- 36: Auflageelement
- 38: Halteelement
- 40: Querträger
- 42: Sicke
- 44: Sicke
- 46: Grundebene
- 48: erhöhter, flächiger Abschnitt
- 50: Kraft
- 52: Abstand

## Patentansprüche

1. Fahrzeug (10), insbesondere Personenkraftwagen oder Lastkraftwagen, mit einer Grundkarosserie (12) zum Abstützen einer Frontschürze (22), die sich im Wesentlichen in vertikaler Richtung über die gesamte Front des Fahrzeugs unterhalb einer Motorhaube (24) erstreckt, wobei die Frontschürze (22) in ihrem oberen Teil von einer Kühlerverkleidung (26) und in ihrem unteren Teil von einer Stoßfängerverkleidung (28) gebildet ist, wobei am oberen Rand der Kühlerverkleidung (26) über deren gesamte Breite ein Knickelement (32) angeordnet ist, das insgesamt einstückig mit der Stoßfängerverkleidung ausgebildet ist, wobei das Knickelement (32) mit zumindest einem Auflageelement (36) auf einem Querträger (16) aufliegt, das einstückig mit dem Knickelement (32) gestaltet und am Querträger (16) angeschraubt ist, und wobei das Knickelement (32) bei einer definierten äußeren Krafteinwirkung (50) an einer Knickkante (34) nach oben knickbar und damit vorbestimmt verformbar ist, wobei die Motorhaube (24) vom dem Knickelement (32) aufgrund eines Abstands (52) zwischen dem Knickelement (32) und der Motorhaube (24) nicht berührt wird und bei einem Aufprall zunächst aufgrund einer Kraft (50) die Frontschürze (22) in Richtung Fahrzeuginnenraum verschoben wird und damit die Aufprallenergie absorbiert wird, ohne Schäden am dem Fahrzeug (10) zu verursachen.

2. Fahrzeug nach Anspruch 1, bei dem die Knickkante (34) sich im Wesentlichen über die gesamte Breitenerstreckung der Frontschürze (22) erstreckt.

## Claims

1. A vehicle (10), in particular a passenger car or lorry, comprising a base body (12) to support a front apron (22) which extends substantially in a vertical direction over the entire front of the vehicle below an engine bonnet (24), wherein the upper part of the front apron (22) is formed by a radiator cowling (26), and the lower part by a bumper cowling (28), wherein a bending element (32) is arranged at the upper edge of the radiator cowling (26) over the entire width thereof, which element is formed integrally with the bumper cowling overall, wherein at least one bearing element (36) of the bending element (32) is supported on a cross member (16), which bearing element is formed integrally with the bending element (32) and is screwed onto the cross member (16), and wherein the bending element (32) can be bent upwards when a defined external force (50) is applied to a bending edge (34) and can thus be deformed in a predetermined manner, wherein the engine bonnet (24) is not touched by the bending element (32) due to a distance (52) between the bending element (32) and the engine bonnet (24) and, in the event of a collision, the front apron (22) is firstly displaced towards the vehicle interior due to a force (50) and thus absorbs the collision energy without causing any damage to the vehicle (10).

2. Vehicle according to claim 1, wherein the bending edge (34) extends substantially across the entire width of the front apron (22).

## Revendications

1. Véhicule (10) notamment véhicule de tourisme ou véhicule utilitaire comportant une carrosserie de base (12) pour soutenir une jupe frontale (22) qui s'étend pratiquement dans la direction verticale sur toute la face avant du véhicule sous le capot (24) du moteur,
* la jupe avant (22) étant formée dans sa partie supérieure par l'habillage (26) du radiateur et dans sa partie inférieure par l'habillage de pare-choc (28),
* le bord supérieur de l'habillage de radiateur (26) ayant sur toute sa largeur, un élément pliant (32) qui est globalement en une seule pièce avec l'habillage de pare-choc,
* l'élément pliant (32) s'appuyant par au moins un élément d'appui (36) sur une poutre transversale (16) en une seule pièce avec l'élément pliant (32) en étant vissé à la poutre transversale (16) et l'élément pliant (32) pouvant se plier vers le haut sous l'effet de l'action d'une force extérieure définie (50) sur l'arête de pliage (34) et se déformant ainsi de manière prédéfinie,
* le capot (24) n'étant pas touché par l'élément pliant (32) du fait de la distance (52) entre l'élément pliant (32) et le capot moteur (24) et en cas de choc, tout d'abord la jupe avant (22) est déplacée sous l'effet de la force (50), en direction de l'intérieur du véhicule et elle absorbe ainsi l'énergie du choc sans occasionner de dommage au véhicule (10).

2. Véhicule selon la revendication 1,
selon lequel l'arête pliante (34) s'étend pratiquement sur toute l'extension en largeur de la jupe avant (22).
